# EUROPEAN PATENT SPECIFICATION

(11) **EP 2 825 614 B1**
(45) Date of publication and mention of the grant of the patent: **31.01.2018**
(21) Application number: 14768596.0
(22) Date of filing: 12.03.2014
(51) Int. Cl.: C09K 8/72, C09K 8/74

(54) **TREATMENT FLUIDS COMPRISING A HYDROXYPYRIDINECARBOXYLIC ACID AND METHODS FOR USE THEREOF**
BEHANDLUNGSFLÜSSIGKEITEN MIT EINER HYDROXYPYRIDINCARBONSÄURE UND VERFAHREN ZUR VERWENDUNG DAVON
FLUIDES DE TRAITEMENT COMPRENANT UN ACIDE HYDROXYPYRIDINECARBOXYLIQUE ET LEURS PROCÉDÉS D'UTILISATION

(30) Priority: 15.03.2013 US 201313837090
(43) Date of publication of application: 21.01.2015
(73) Proprietor: Halliburton Energy Services, Inc., Houston, TX 77072 (US)
(72) Inventor: REYES, Enrique Antonio, Houston, Texas 77032 (US); SMITH, Alyssa Lynn, Houston, Texas 77032 (US)
(74) Representative: Hoffmann Eitle
(86) International application number: PCT/US2014/024026
(87) International publication number: WO 2014/150701

(56) References cited:
- US-A1- 2005 065 036
- US-A1- 2012 067 576
- US-A1- 2012 145 401
- MARCO, VALERIO B. DI ET AL.: 'Complexation of 3,4-hydroxypyridinecarboxylic acids with iron(III).' INORGANICA CHIMICA ACTA. vol. 357, no. 12, 2004, pages 3753 - 3758, XP004550341
- MARCO, VALERIO B. DI ET AL.: 'Evaluation of 3, 4-hydroxypyridinecarboxylic acids as possible bidentate chelating agents for aluminium (III): synthesis and metal-ligand solution chemistry.' EUROPEAN JOURNAL OF INORGANIC CHEMISTRY vol. 2002, no. 10, 2002, pages 2648 - 2655, XP055163242

## Description

### BACKGROUND

The present disclosure generally relates to subterranean treatment fluids, and, more specifically, to treatment fluids that can mitigate the occurrence or effects of precipitation in a subterranean formation by complexing a metal ion therein during a treatment operation.

Treatment fluids can be used in a variety of subterranean treatment operations. Such treatment operations can include, without limitation, drilling operations, stimulation operations, production operations, sand control treatments, and the like. As used herein, the terms "treat," "treatment," "treating," and grammatical equivalents thereof refer to any subterranean operation that uses a fluid in conjunction with achieving a desired function and/or for a desired purpose. Use of these terms does not imply any particular action by the treatment fluid or a component thereof, unless otherwise specified herein. Illustrative treatment operations can include, for example, drilling operations, fracturing operations, gravel packing operations, acidizing operations, scale dissolution and removal operations, sand control operations, consolidation operations, and the like.

Acidizing operations can stimulate a subterranean formation to increase production therefrom. During an acidizing operation, an acid-soluble material in the subterranean formation can be dissolved by one or more acids to expand existing flow pathways in the subterranean formation, to create new flow pathways in the subterranean formation, or to remove acid-soluble precipitation damage in the subterranean formation. The acid-soluble material being dissolved by the acid(s) can be part of the native formation matrix or can have been deliberately introduced into the subterranean formation in conjunction with a stimulation or like treatment operation (*e.g*., proppant particulates). Illustrative substances within the native formation matrix that may be dissolved by an acid include, but are not limited to, carbonates, silicates and aluminosilicates. Other substances can be dissolved as well during the course of performing an acidizing operation. As discussed below, certain components dissolved during an acidizing operation can be problematic and possibly detrimental for future production from the subterranean formation.

Carbonate formations can contain minerals that comprise a carbonate anion (*e.g*., calcite). When acidizing a carbonate formation, the acidity of the treatment fluid alone can be sufficient to solubilize the formation components. Both mineral acids (*e.g*., hydrochloric acid) and organic acids (*e.g*., acetic and formic acids) can be used to treat a carbonate formation, often with similar degrees of success.

Siliceous formations can include minerals such as, for example, zeolites, clays, and feldspars. As used herein, the term "siliceous" refers to a substance having the characteristics of silica, including silicates and/or aluminosilicates. Most sandstone formations, for example, contain about 40% to about 98% sand quartz particles (*i.e.,* silica), bonded together by various amounts of cementing materials, which may be siliceous in nature (*e.g*., aluminosilicates or other silicates) or non-siliceous in nature (*e.g*., carbonates, such as calcite). Acidizing a siliceous formation or a formation containing a siliceous material is thought to be considerably different than acidizing a carbonate formation. Specifically, the mineral and organic acids that can be effective for acidizing a carbonate formation may have little effect on a siliceous formation, since these acids do not effectively react with siliceous materials to affect their dissolution. In contrast, hydrofluoric acid, another mineral acid, can react very readily with siliceous materials to promote their dissolution. Oftentimes, a mineral acid or an organic acid can be used in conjunction with hydrofluoric acid to maintain a low pH state as the hydrofluoric acid becomes spent, where the low pH state may promote initial silicon or aluminum dissolution and aid in maintaining these substances in a dissolved state.

Despite the advantages that can be realized by acidizing a siliceous formation, silicon and/or aluminum can produce damaging precipitation after their dissolution that can sometimes be more detrimental for production than if the acidizing operation had not been performed in the first place. Unless preventative measures are taken, some of which are discussed below, the equilibrium solubility levels of silicon and aluminum in a fluid usually depend upon one another. That is, by maintaining high levels of dissolved aluminum during an acidizing operation conducted with hydrofluoric acid, high levels of dissolved silicon can be maintained as well. In this regard, dissolved aluminum can be maintained in a fluid by coordination with fluoride ions, but such aluminum coordination can leave insufficient remaining fluoride ions for effective silicon solubilization to take place. Damaging silicon precipitation can occur as a result. Chelating agents can be used to increase the degree of silicon solubilization by maintaining aluminum in a dissolved state. Specifically, by chelating aluminum to form a soluble aluminum complex, increased levels of dissolved silicon may be realized, since more free fluoride ions are left available to affect its solubilization. In addition to chelating agents that target a metal ion, particularly aluminum, other types of complexing agents can be employed that directly complex silicon and promote its solubilization.

Iron dissolution can also be problematic during acidizing operations, particularly dissolution of ferrous iron. Ferric iron can form in the presence of dissolved oxygen and can later precipitate as ferric hydroxide above a pH of about 2. Ferric hydroxide precipitation represents an operational concern due to its highly gelatinous consistency. Ferric iron can also result from tubing pickling. The latter can usually be effectively managed by flowing out the fluid containing the iron dissolution products, although this added step may add to process complexity and cost. Due to the damage potential represented by ferric iron, its chelation may also be desirable while downhole.

Even when chelating agents are used, precipitation of insoluble fluorosilicates and aluminosilicates can sometimes be problematic in the presence of Group 1 metal ions (*i.e.,* alkali metal ions). The terms "Group 1 metal ions" and "alkali metal ions" will be used synonymously herein. Under low pH conditions (*e.g*., below a pH of about 3), dissolved silicon can react with Group 1 metal ions (*e.g*., Na⁺ and K⁺) to produce insoluble alkali metal fluorosilicates and aluminosilicates. Other metal ions, including Group 2 metal ions (*e.g*., Ca²⁺ and Mg²⁺), may also be problematic in this regard. In many instances, costly pre-flush fluids may be introduced to a subterranean formation prior to performing an acidizing operation therein in order to decrease the quantity of available alkali metal ions. In some instances, such pre-flush fluids can contain ammonium ions (NH₄⁺) that can displace alkali metal ions in the subterranean formation and leave it desirably conditioned for acidization. In contrast to alkali metal ions, ammonium ions are not believed to promote the formation of insoluble fluorosilicates and aluminosilicates. The use of pre-flush fluids, particularly those containing ammonium ions, can considerably add to the time and expense needed to perform an acidizing operation. In addition to problematic alkali metal ions in the subterranean formation, the precipitation of alkali metal fluorosilicates and fluoroaluminates can considerably limit the sourcing of carrier fluids that may be used when acidizing a subterranean formation.

### DETAILED DESCRIPTION

The present disclosure generally relates to subterranean treatment fluids, and, more specifically, to treatment fluids that can mitigate the occurrence or effects of precipitation in a subterranean formation by complexing a metal ion therein during a treatment operation.

The present invention comprises a method for treating a subterranean formation according to claims 1 to 11 as well as a subterranean treatment fluid according to claim 12.

In commonly owned United States Patent Application 13/444,883 (published as US2013/0269936) to the present inventors, filed on April 12, 2012, the use of several substituted pyridine compounds for silicate complexation was disclosed. Among the substituted pyridine compounds that may be used for silicate complexation are various hydroxypyridinecarboxylic acids. Not only do hydroxypyridinecarboxylic acids have the ability to promote silicate complexation, but, as discussed hereinbelow, the inventors recognized that these compounds can also be effective for promoting complexation of aluminum ions and ferric ions. Thus, it is believed that hydroxypyridinecarboxylic acids may desirably promote the solubilization of silicon and aluminum in two different manners. As metal complexing agents, hydroxypyridinecarboxylic acids may present particular advantages, as discussed hereinafter.

Document US 2012/145401 discloses a method comprising (i') providing a treatment fluid having a pH of 6 or less that comprises an acidic base fluid and (a') a chelating agent, (ii') introducing the treatment fluid into at least a portion of a subterranean formation, and (iii') complexing at least a portion of any metal ions present in the subterranean formation with the chelating agent, wherein the chelating agent includes a-hydroxycarboxylic acids.

As discussed above, the precipitation of dissolved silicon and aluminum in a subterranean formation may be mitigated through coordination of aluminum ions with a chelating agent. A number of different types of chelating agents may be used in this regard including, for example, ethylenediaminetetraacetic acid (EDTA), propylenediaminetetraacetic acid (PDTA), nitrilotriacetic acid (NTA), N-(2-hydroxyethyl)ethylenediaminetriacetic acid (HEDTA), diethylenetriaminepentaacetic acid (DTPA), hydroxyethyliminodiacetic acid (HEIDA), cyclohexylenediaminetetraacetic acid (CDTA), diphenylaminesulfonic acid (DPAS), ethylenediaminedi(o-hydroxyphenylacetic) acid (EDDHA), glucoheptonic acid, gluconic acid, citric acid, any salt thereof, any derivative thereof, and the like. Biodegradable chelating agents that may be particularly desirable for introduction into a subterranean formation are discussed in more detail hereinbelow.

For chelating agents having carboxylic acid groups, including those noted above, metal ion complexation is usually strongest when the carboxylic acid groups are at least partially in a deprotonated state. That is, in treatment fluids having pH values below the pKₐ of the carboxylic acid groups, chelation may be less effective, since the carboxylic acid groups remain substantially protonated. In order to promote effective metal ion chelation, the pH of the treatment fluid may need to be maintained at a level higher than that at which acidizing is typically most effective. For example, the carboxylic acid groups in many chelating agents are not substantially deprotonated below a pH of about 2 to 3. Thus, when vigorous acidization at a low pH is needed, metal ion chelation can sometimes not be a viable strategy for mitigating potential precipitation issues.

As an alternative to more conventional chelating agents in subterranean treatment operations and as alluded to above, the inventors determined that hydroxypyridinecarboxylic acids may present particular advantages. Foremost, many hydroxypyridinecarboxylic acids are particularly acidic and have exceptionally low pKₐ values as a result (e.g., pKₐ values below 1). Accordingly, their effective pH range for metal ion complexation is considerably lower than that of other types of chelating agents, thereby permitting more vigorous acidizing to take place. Moreover, hydroxypyridinecarboxylic acids can have exceptionally high formation constants for complexation of ferric iron and aluminum, thereby making these chelating agents well suited for use in addressing precipitation of these species during subterranean operations. A further advantage of hydroxypyridinecarboxylic acids in this regard is their high solubilities in aqueous fluids, thereby allowing treatment fluids with high capacities for metal ion complexation to be formulated.

In addition to the foregoing advantages, hydroxypyridinecarboxylic acids may make dissolved silicon and aluminum less susceptible to the presence of alkali metal ions. That is, by decreasing the amount of free aluminum and/or silicon in a fluid, an increased tolerance of the remaining silicon and aluminum toward alkali metal ions may result. Increasing the tolerance of dissolved silicon and aluminum toward the presence of alkali metal ions may allow fewer precautions to be taken during the treatment of a subterranean formation. For example, it may not be necessary to conduct a pre-flush treatment with an NH₄⁺-containing treatment fluid prior to acidizing, or fewer pre-flush treatments may be needed. This can reduce the time and expense needed to conduct the acidizing operation. Likewise, there may be more tolerance for the introduction of alkali metal ions into a subterranean formation during acidization, thereby allowing saltier water sources to be used.

As a further advantage, hydroxypyridinecarboxylic acids can desirably be used in combination with other chelating agents to broaden the spectrum of metal ions that may be complexed during a treatment operation. Since hydroxypyridinecarboxylic acids complex ferric iron and aluminum ions so readily, they may be used in combination with other chelating agents that are less selective for the metal ions that they coordinate. Thus, hydroxypyridinecarboxylic acids may be used in combination with another chelating agent to target metal ions that are present in a subterranean formation in concert with large amounts of ferric iron and/or aluminum ions. Non-selective chelating agents may be unable to complex sufficient quantities of a desired metal ion in the presence of larger amounts of other ions (*e.g*., ferric iron and aluminum ions), whereas the same non-selective chelating agent may effectively complex the desired metal ion if a hydroxypyridinecarboxylic acid is used to complex ferric iron and/or aluminum ions. The selective complexation properties of hydroxypyridinecarboxylic acids can desirably allow lower quantities of both chelating agents to be used, thereby improving the environmental and cost profile of a treatment operation. As a non-limiting example, hydroxypyridinecarboxylic acids may be used in conjunction with a conventional chelating agent to control calcium ions in the presence of ferric iron and aluminum ions in a subterranean formation, where the conventional chelating agent can complex the calcium ions after the ferric iron and aluminum ions have been complexed with the hydroxypyridinecarboxylic acid.

As used herein, the term "hydroxypyridinecarboxylic acid" will refer to compounds containing a carboxylic acid group and a phenolic hydroxyl group bound to a pyridine ring. It is to be recognized that the term "hydroxypyridinecarboxylic acid" includes tautomeric forms of these compounds, including pyridones.

As used herein, the terms "complex," "complexing" and other variants thereof refer to the formation of a metal-ligand bond. In some embodiments, the metal-ligand bond may comprise a chelate bond.

Treatment fluids described herein can comprise a hydroxypyridinecarboxylic acid, a salt thereof, a tautomer thereof, or a combination thereof. In some embodiments, the treatment fluids can further comprise another chelating agent. In some embodiments, the treatment fluids can further comprise hydrofluoric acid or a hydrofluoric acid-generating compound. In further embodiments, the treatment fluids can further comprise an acid or an acid-generating compound.

In some embodiments, hydroxypyridinecarboxylic acids suitable for use in the treatment fluids described herein may contain their carboxylic acid group and their phenolic hydroxyl group in a 1,2-arrangement on the pyridine ring. Designation of such a relative arrangement of the carboxylic acid group and the phenolic hydroxyl group does not imply that these groups are located at the IUPAC nomenclature 1 and 2 positions of the pyridine ring, rather that the groups are located on adjacent carbon atoms. The 1,2-arrangement of the phenolic hydroxyl group and the carboxylic acid group may be especially effective for chelating metal ions, although the present invention is not to be limited in this regard by any particular theory or mechanism. In more particular embodiments, the hydroxypyridinecarboxylic acids may have a structure selected from the group consisting of the following: 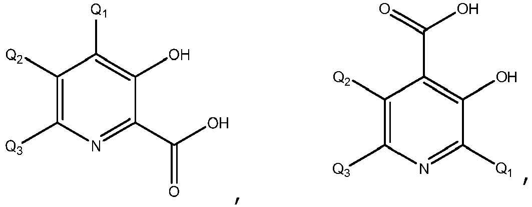 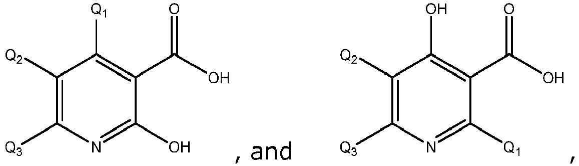 where Q₁-Q₃ are independently H or any substituent. The identities of Q₁-Q₃ are not believed to be particularly limited. Factors that may be taken into account when choosing a substitution pattern and Q₁-Q₃ substituent identities for the hydroxypyridinecarboxylic acids may include, for example, ease of synthesis, cost of starting materials, solubility, formation constants for ferric ion and/or aluminum ion complexation, carboxylic acid pKₐ values and the like. For example, one of ordinary skill in the art will recognize that electron-withdrawing substituents, such as nitro groups and halogens, may promote charge delocalization of a carboxylate anion and desirably lower pKₐ values of hydroxypyridinecarboxylic acids that are so-functionalized. In other embodiments, any of Q₁-Q₃ may comprise H or an alkyl group such as methyl, ethyl, propyl, isopropyl, butyl, isobutyl, or t-butyl groups, for example. According to the present invention the hydroxypyridinecarboxylic acids for aluminum and ferric ion complexation are the followings : 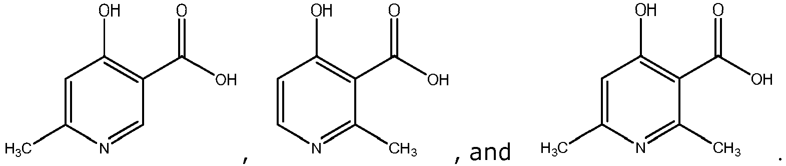 In still other embodiments, any two of Q₁-Q₃ that are located in a 1,2-arrangement may be connected together to form a carbocyclic ring, a heterocyclic ring, or a heteroaromatic ring. Illustrative ring systems that may be formed include, for example, tetrahydroquinolines, tetrahydroisoquinolines, quinolines, isoquinolines, pyrrolopyridines, pyridopyridines, imidazopyridines, and the like.

In some embodiments, the treatment fluids described herein may comprise an aqueous carrier fluid as their continuous phase. Suitable aqueous carrier fluids may include, for example, deionized water, fresh water, acidified water, salt water, seawater, brine (*e.g*., a saturated salt solution), or an aqueous salt solution (*e.g*., a non-saturated salt solution). Aqueous carrier fluids can be obtained from any suitable source. In some embodiments, the aqueous carrier fluid may be free of alkali metal ions or contain as low a concentration of alkali metal ions as attainable at a reasonable cost. Choice of a low salt or salt-free aqueous carrier fluid may lessen the incidence of alkali metal fluorosilicate or alkali metal aluminosilicate precipitation. In other embodiments, however, the treatment fluids described herein may comprise an aqueous carrier fluid having some alkali metal ions. In still other embodiments, the treatment fluids described herein may comprise an aqueous carrier fluid containing ammonium ions.

In some or other embodiments, the treatment fluids described herein may comprise an organic solvent, such as hydrocarbons, as at least a portion of its continuous phase.

The volume of the carrier fluid to be used in the present treatment fluids may be dictated by a number of factors including, for example, the solubility of the hydroxypyridinecarboxylic acid in the carrier fluid, the quantities of metal ions and siliceous materials in a subterranean formation being treated, and the like. Determination of an appropriate volume of carrier fluid may also be influenced by other factors, as will be understood by one having ordinary skill in the art.

The concentration of the hydroxypyridinecarboxylic acid used in the treatment fluids described herein can vary over a wide range. Factors that may dictate a chosen concentration of the hydroxypyridinecarboxylic acid may include, for example, the solubility of the hydroxypyridinecarboxylic acid in the carrier fluid, the quantities of metal ions and siliceous materials in the subterranean formation being treated, any combination thereof, or the like. In some embodiments, the concentration of the hydroxypyridinecarboxylic acid in the treatment fluid may range between about 0.1% to about 50% of the treatment fluid by weight, or between about 0.1% to about 5% of the treatment fluid by weight, or between about 1% to about 10% of the treatment fluid by weight, or between about 5% to about 15% of the treatment fluid by weight, or between about 0.5% to about 5% of the treatment fluid by weight, or between about 10% to about 25% of the treatment fluid by weight, or between about 5% to about 50% of the treatment fluid by weight.

In some embodiments, treatment fluids described herein can have a pH ranging between about 0 and about 7, or between about 0 and about 2, or between about 1 and about 2, or between about 1 and about 3, or between about 1 and about 4, or between about 1 and about 5, or between about 1 and about 6, or between about 1 and about 7. Such pH values, particularly those below a pH of about 2, may be especially advantageous for promoting dissolution of silicates and aluminosilicates at a desirable rate, as well as maintaining silicon in a dissolved state once dissolution occurs.

In some embodiments, the treatment fluids described herein may include an acid or an acid-generating compound. The acid or acid-generating compound may be a mineral acid or an organic acid. Suitable mineral acids may include, for example, hydrochloric acid, hydrofluoric acid and the like. Suitable organic acids may include, for example, formic acid, acetic acid, methanesulfonic acid, chloroacetic acid, dichloroacetic acid, trichloroacetic acid, and the like. In some embodiments, hydrofluoric acid may be present in the treatment fluids described herein in combination with an acid-generating compound or another acid, such as hydrochloric acid or an organic acid, for example. Use of hydrofluoric acid in combination with another acid or an acid-generating compound may help maintain the pH of the treatment fluid in a desired range as the hydrofluoric acid of the treatment fluid becomes spent. For example, the acid or acid-generating compound may be present in the treatment fluid in a quantity sufficient to maintain the pH of the treatment fluid within the ranges set forth above. In other embodiments, however, hydrofluoric acid may be the only acid present in the treatment fluid other than the hydroxypyridinecarboxylic acid chelating agent.

Examples of suitable acid-generating compounds may include, for example, esters, aliphatic polyesters, orthoesters, poly(orthoesters), poly(lactides), poly(glycolides), poly(ε-caprolactones), poly(hydroxybutyrates), poly(anhydrides), ethylene glycol monoformate, ethylene glycol diformate, diethylene glycol diformate, glyceryl monoformate, glyceryl diformate, glyceryl triformate, triethylene glycol diformate, and formate esters of pentaerythritol.

Examples of suitable hydrofluoric acid-generating compounds may include, for example, fluoroboric acid, fluorosulfuric acid, hexafluorophosphoric acid, hexafluoroantimonic acid, difluorophosphoric acid, hexafluorosilicic acid, potassium hydrogen difluoride, sodium hydrogen difluoride, boron trifluoride acetonitrile complex, boron trifluoride acetic acid complex, boron trifluoride dimethyl ether complex, boron trifluoride diethyl ether complex, boron trifluoride dipropyl ether complex, boron trifluoride dibutyl ether complex, boron trifluoride t-butyl methyl ether complex, boron trifluoride phosphoric acid complex, boron trifluoride dihydrate, boron trifluoride methanol complex, boron trifluoride ethanol complex, boron trifluoride propanol complex, boron trifluoride isopropanol complex, boron trifluoride phenol complex, boron trifluoride propionic acid complex, boron trifluoride tetrahydrofuran complex, boron trifluoride piperidine complex, boron trifluoride ethylamine complex, boron trifluoride methylamine complex, boron trifluoride triethanolamine complex, polyvinylammonium fluoride, polyvinylpyridinium fluoride, pyridinium fluoride, imidazolium fluoride, ammonium fluoride, ammonium bifluoride, tetrafluoroborate salts, hexafluoroantimonate salts, hexafluorophosphate salts, bifluoride salts, and any combination thereof.

When used, a hydrofluoric acid-generating compound can be present in the treatment fluids described herein in an amount ranging between about 0.1% to about 20% of the treatment fluid by weight. In other embodiments, an amount of the hydrofluoric acid-generating compound can range between about 0.5% to about 10% of the treatment fluid by weight or between about 0.5% to about 8% of the treatment fluid by weight. Hydrofluoric acid may be used in the treatment fluids in similar concentration ranges.

In some embodiments, the treatment fluids described herein can further comprise another chelating agent. Inclusion of another chelating agent in the present treatment fluids can desirably expand the breadth of metal ions that may be complexed beyond those that are readily chelated with hydroxypyridinecarboxylic acids (*e.g*., aluminum ions and ferric ions). The additional chelating agent that may be present is not believed to be particularly limited and may be chosen based on factors such as, for example, cost, environmental factors, and the presence of particular metal ions in a subterranean formation. In some embodiments, traditional chelating agents such as, for example, ethylenediaminetetraacetic acid (EDTA), propylenediaminetetraacetic acid (PDTA), nitrilotriacetic acid (NTA), N-(2-hydroxyethyl)ethylenediaminetriacetic acid (HEDTA), diethylenetriaminepentaacetic acid (DTPA), hydroxyethyliminodiacetic acid (HEIDA), cyclohexylenediaminetetraacetic acid (CDTA), diphenylaminesulfonic acid (DPAS), ethylenediaminedi(o-hydroxyphenylacetic) acid (EDDHA), glucoheptonic acid, gluconic acid, citric acid, any salt thereof, any derivative thereof, or the like may be used.

In some or other embodiments, the additional chelating agent may be biodegradable, which may be particularly desirable for downhole use, where there may be regional environmental considerations to take into account. As used herein, the term "biodegradable" refers to a substance that can be broken down by exposure to environmental conditions including native or non-native microbes, sunlight, air, heat, and the like. Use of the term "biodegradable" does not imply a particular degree of biodegradability, mechanism of biodegradability, or a specified biodegradation half-life. Suitable biodegradable chelating agents may include, for example, glutamic acid diacetic acid (GLDA), methylglycine diacetic acid (MGDA), β-alanine diacetic acid (β-ADA), ethylenediaminedisuccinic acid, S,S-ethylenediaminedisuccinic acid (EDDS), iminodisuccinic acid (IDS), hydroxyiminodisuccinic acid (HIDS), polyamino disuccinic acids, N-bis[2-(1,2-dicarboxyethoxy)ethyl]glycine (BCA6), N-bis[2-(1,2-dicarboxyethoxy)ethyl]aspartic acid (BCA5), N-bis[2-(1,2-dicarboxyethoxy)ethyl]methylglycine (MCBA5), N-tris[(1,2-dicarboxyethoxy)ethyl]amine (TCA6), N-methyliminodiacetic acid (MIDA), iminodiacetic acid (IDA), N-(2-acetamido)iminodiacetic acid (ADA), hydroxymethyl-iminodiacetic acid, 2-(2-carboxyethylamino) succinic acid (CEAA), 2-(2-carboxymethylamino) succinic acid (CMAA), diethylenetriamine-N,N"-disuccinic acid, triethylenetetramine-N,N"'-disuccinic acid, 1,6-hexamethylenediamine-N,N'-disuccinic acid, tetraethylenepentamine-N,N""-disuccinic acid, 2-hydroxypropylene-1,3-diamine-N,N'-disuccinic acid, 1,2-propylenediamine-N,N'-disuccinic acid, 1,3-propylenediamine-N,N'-disuccinic acid, cis-cyclohexanediamine-N,N'-disuccinic acid, trans-cyclohexanediamine-N,N'-disuccinic acid, ethylenebis(oxyethylenenitrilo)-N,N'-disuccinic acid, glucoheptanoic acid, cysteic acid-N,N-diacetic acid, cysteic acid-N-monoacetic acid, alanine-N-monoacetic acid, N-(3-hydroxysuccinyl) aspartic acid, N-[2-(3-hydroxysuccinyl)]-L-serine, aspartic acid-N,N-diacetic acid, aspartic acid-N-monoacetic acid, any salt thereof, any derivative thereof, or any combination thereof.

Like the hydroxypyridinecarboxylic acid chelating agent, the concentration of the additional chelating agent used in the treatment fluids described herein can vary over a wide range. Factors dictating a chosen concentration of the additional chelating agent may include, for example, the quantity and identity of metal ions in the subterranean formation being treated, the amount of hydroxypyridinecarboxylic acid that is present, the solubility of the additional chelating agent, or any combination thereof. In some embodiments, the concentration of the additional chelating agent in the treatment fluid may range between about 0.1% to about 50% of the treatment fluid by weight, or between about 0.1% and about 5% of the treatment fluid by weight, or between about 1% and about 10% of the treatment fluid by weight, or between about 5% and about 15% of the treatment fluid by weight, or between about 0.5% and about 5% of the treatment fluid by weight, or between about 10% and about 25% of the treatment fluid by weight, or between about 5% and about 50% of the treatment fluid by weight.

In some embodiments, the treatment fluids described herein may further comprise a silica scale control additive. As used herein, the term "silica scale control additive" will refer to any substance capable of suppressing silica scale build-up by increasing the solubility of dissolved silicon, inhibiting polymer chain propagation of dissolved silicon to produce precipitates, and/or decreasing the size and/or quantity of precipitates formed from dissolved silicon. Utilization of a silica scale control additive in combination with metal ion complexation provided by a hydroxypyridinecarboxylic acid may beneficially permit a greater level of dissolved silicon to be realized than is possible through metal ion complexation alone. Suitable silica scale control additives may include, for example, phosphonates, aminocarboxylic acids, polyaminocarboxylic acids, polyalkyleneimines (*e.g.,* polyethyleneimine), polyvinylamines, polyallylamines, polyallyldimethylammonium chloride, polyaminoamide dendrimers, any derivative thereof, and any combination thereof. Illustrative commercially available silica scale control additives include, for example, ACUMER 5000 (Rohm and Hass), and CLA-STA® XP and CLA-STA® FS (Halliburton Energy Services, Inc.). Other suitable silica scale control additives may include ortho-dihydroxybenzene compounds, such as tannic acid, for example, as described in commonly owned United States Patent Application 12/967,868, filed December 14, 2010 and now available as United States Patent Application Publication 2012/0145401.

In some embodiments, treatment fluids described herein may further comprise a silicate complexing agent, such as a functionalized pyridine compound, as described in commonly owned United States Patent Application 13/444,883, published as US2013/0269936 and filed on April 12, 2012.

In some embodiments, treatment fluids described herein may further comprise an alkali metal complexing agent, such as a crown ether, azacrown ether, or pseudocrown ether, as described in commonly owned United States Patent Application 13/444,897, published as US2013/0269944 and filed on April 12, 2012.

In some embodiments, treatment fluids described herein may further comprise a compound having two or more quaternized amine groups, as described in commonly owned United States Patent Application 13/588,158 (published as US2014/0048261) filed on August 17, 2012. In more particular embodiments, the compound having two or more quaternized amine groups may comprise a bis-quaternary ammonium compound. Illustrative bis-quaternary ammonium compounds that may be used in the treatment fluids described herein are further set forth in United States Patent Application Publications 2004/0235677, 2006/0013798, and 2010/0311622. One example of a bis-quaternary ammonium compound composition that can be suitable for use in the treatment fluids described herein is product BQA-6170 (produced by Corsitech, Houston, Texas and commercially available through Halliburton Energy Services, Inc.), which is a mixture of bis-quaternary ammonium compounds.

In further embodiments, the treatment fluids described herein may further comprise any number of additives that are commonly used in treatment fluids including, for example, surfactants, gel stabilizers, antioxidants, polymer degradation prevention additives, relative permeability modifiers, scale inhibitors, corrosion inhibitors, foaming agents, defoaming agents, antifoaming agents, emulsifying agents, de-emulsifying agents, iron control agents, proppants or other particulates, particulate diverters, salts, acids, fluid loss control additives, gas, catalysts, clay control agents, dispersants, flocculants, scavengers (*e.g*., H₂S scavengers, CO₂ scavengers or O₂ scavengers), gelling agents, lubricants, breakers, friction reducers, bridging agents, viscosifiers, weighting agents, solubilizers, pH control agents (*e.g*., buffers), hydrate inhibitors, consolidating agents, bactericides, catalysts, clay stabilizers, and the like. Combinations of these additives can be used as well. Given the benefit of the present disclosure, one of ordinary skill in the art will be able to formulate a treatment fluid of the present disclosure such that the treatment fluid has properties suitable for a given application.

In various embodiments, the treatment fluids described herein may be used in conjunction with treating a subterranean formation. In some embodiments, the treatment fluids described herein may be used in conjunction with a stimulation operation conducted in a subterranean formation. In some embodiments, the stimulation operation can comprise a fracturing operation. In some or other embodiments, the stimulation operation can comprise an acidizing operation. In some embodiments, the treatment fluids described herein may be used in conjunction with a remediation operation in a subterranean formation. Each of the foregoing treatment operations is discussed in more detail hereinbelow.

The type of subterranean formation being treated with the present treatment fluids is not believed to be particularly limited. In some embodiments, the subterranean formation may comprise a carbonate formation, such as a limestone or dolomite formation, for example. Particularly in embodiments in which the treatment fluids comprise hydrofluoric acid or a hydrofluoric acid-generating compound, the subterranean formation may comprise a siliceous formation or have had a siliceous material introduced thereto. In some embodiments, the subterranean formation may comprise a sandstone formation or a clay-containing formation. In some or other embodiments, the subterranean formation may comprise native minerals such as, for example, authigenic or detrital minerals, particularly layered aluminosilicates, feldspathic minerals, or purely siliceous minerals. As generally discussed above, treatment of the subterranean formation may improve the formation's permeability by mitigating the formation of damaging precipitates and/or removing precipitates that have formed in the subterranean formation. In addition to subterranean formations that natively contain the above minerals, in some embodiments, the subterranean formation may have had any of the above minerals introduced thereto. For example, in some embodiments, proppant or gravel particulates that comprise a potentially problematic mineral can be introduced to a subterranean formation and subsequently be treated therein. That is, in some embodiments, the present treatment fluids may be used for treating a proppant pack or a gravel pack in a subterranean formation.

In more particular embodiments, the subterranean formation may comprise an aluminosilicate material, which can be natively present in the subterranean formation or have been introduced thereto. Aluminosilicate materials that may be present in a siliceous subterranean formation include clays (including mixed layer and swelling clays), zeolites, kaolinite, illite, chlorite, bentonite, and feldspars, for example. It is to be recognized that, in some embodiments, a siliceous subterranean formation may comprise other materials that are non-siliceous in nature. For example, in some embodiments, a siliceous subterranean formation may comprise about 1% to about 35% of a carbonate material. In some embodiments, the subterranean formation can comprise a matrix that is substantially non-siliceous in nature but contains a siliceous material therein (*e.g*., introduced proppant or gravel particulates or siliceous particulates within a carbonate formation matrix).

In some embodiments, the subterranean formation may comprise silicates, aluminosilicates, ferrous or ferric iron, or any combination thereof. These substances may be naturally occurring within the subterranean formation or be introduced during the course of treating the subterranean formation.

In some embodiments, methods described herein may comprise: providing a treatment fluid comprising a hydroxypyridinecarboxylic acid, a salt thereof, or a tautomer thereof; introducing the treatment fluid into a subterranean formation; and complexing a metal ion in the subterranean formation with the hydroxypyridinecarboxylic acid. In various embodiments, the metal ion may remain soluble in the treatment fluid after being complexed by the hydroxypyridinecarboxylic acid. In some embodiments, complexing the metal ion may comprise forming a chelate of the metal ion with the hydroxypyridinecarboxylic acid. In some embodiments, the metal ion being complexed with the hydroxypyridinecarboxylic acid may comprise an aluminum ion, a ferric ion, or any combination thereof. As will be understood by one having ordinary skill in the art, other metal ions may be complexed by a hydroxypyridinecarboxylic acid as well.

In some embodiments, the methods may further comprise introducing an acid or an acid-generating compound into the subterranean formation. In some embodiments, the acid or the acid-generating compound may comprise hydrofluoric acid or a hydrofluoric acid-generating compound. In some embodiments, the acid or the acid-generating compound may be introduced to the subterranean formation separately from the treatment fluid comprising the hydroxypyridinecarboxylic acid. In some or other embodiments, however, the acid or the acid-generating compound may be present in the treatment fluid comprising the hydroxypyridinecarboxylic acid.

In some embodiments, methods described herein may comprise: providing a treatment fluid comprising a hydroxypyridinecarboxylic acid, a salt thereof, or a tautomer thereof, and hydrofluoric acid or a hydrofluoric acid-generating compound; introducing the treatment fluid into a subterranean formation; dissolving a metal ion in the subterranean formation; and complexing the metal ion in the subterranean formation with the hydroxypyridinecarboxylic acid. In various embodiments, the metal ion may be dissolved with the hydrofluoric acid or the hydrofluoric acid-generating compound.

In some embodiments, the present treatment fluids may be used to remediate a subterranean formation that has precipitation or accumulation damage therein. As used herein, the term "precipitation or accumulation damage" refers to a siliceous material that has been dissolved in a subterranean formation and deposited elsewhere within the subterranean formation, optionally after undergoing a further reaction. That is, the treatment fluids described herein may be used to dissolve the various components of such damage in order to increase the permeability of the subterranean formation, thereby leading to the possibility of increased production. The precipitation or accumulation damage in the subterranean formation may result from precipitation of dissolved silicon, an alkali metal fluorosilicate or an alkali metal fluoroaluminate, for example. In some embodiments, the treatment fluids described herein may be used to remediate precipitation or accumulation damage within a proppant pack or gravel pack within a subterranean formation.

In some embodiments, the treatment fluids described herein may be used in conjunction with acidizing a subterranean formation. As discussed above, acidizing a subterranean formation with the treatment fluids may desirably increase the formation's permeability.

In some embodiments, the treatment fluids described herein may be used in conjunction with fracturing a subterranean formation. In such embodiments, the treatment fluid may be introduced to the subterranean formation at a pressure sufficient to create or enhance at least one fracture therein. That is, the treatment fluid may be introduced to the subterranean formation at or above the fracture gradient of the subterranean formation. In some embodiments, the treatment fluids described herein may also be used to perform a combined stimulation operation such as, for example, a fracture-acidizing treatment.

In some or other embodiments, the treatment fluids described herein may be used to proactively mitigate the formation of precipitation or accumulation damage in a subterranean formation. In this regard, a treatment fluid comprising a hydroxypyridinecarboxylic acid may be introduced to a subterranean formation before a treatment fluid comprising hydrofluoric acid or hydrofluoric acid-generating compound, or a treatment fluid comprising a hydroxypyridinecarboxylic acid may be introduced to a subterranean formation after a treatment fluid comprising hydrofluoric acid or a hydrofluoric acid-generating compound. For example, in some embodiments, the hydroxypyridinecarboxylic acid may be introduced to the subterranean formation before an acidizing fluid containing hydrofluoric acid and/or another acid is introduced, such that the hydroxypyridinecarboxylic acid is already in place in the subterranean formation and ready to complex a metal ion dissolved by the acidizing fluid. In other embodiments, however, it may be more advantageous to begin initial metal ion dissolution by first introducing the acidizing fluid and thereafter introducing the hydroxypyridinecarboxylic acid. In still other embodiments, a treatment fluid comprising hydrofluoric acid, a hydrofluoric acid-generating compound, and/or another acid and a treatment fluid comprising a hydroxypyridinecarboxylic acid may be added to a subterranean formation concurrently (*i.e.,* on-the-fly). In some embodiments, concurrent addition of the hydrofluoric acid and/or hydrofluoric acid-generating compound and the hydroxypyridinecarboxylic acid may comprise adding a treatment fluid that contains both hydrofluoric acid or a hydrofluoric acid-generating compound and a hydroxypyridinecarboxylic acid to the subterranean formation.

In some embodiments, the treatment fluids described herein may be used while drilling a wellbore penetrating a subterranean formation. For example, when used during drilling, the treatment fluids may desirably leave the subterranean formation conditioned with the hydroxypyridinecarboxylic acid in order to proactively manage the formation of damaging precipitates in the subterranean formation. It is to be recognized, however, that the present treatment fluids may also be used for proactive treatment of a subterranean formation at points in time other than in the drilling stage.

The present disclosure further includes the following embodiments :
A. Methods of complexing a metal ion in a subterranean formation. The methods involve providing a treatment fluid comprising a hydroxypyridinecarboxylic acid, a salt thereof, a tautomer thereof, or a combination thereof; introducing the treatment fluid into a subterranean formation; and complexing a metal ion in the subterranean formation with the hydroxypyridinecarboxylic acid.
B. Methods of dissolving a metal ion in a subterranean formation. The methods involve providing a treatment fluid comprising a hydroxypyridinecarboxylic acid, a salt thereof, a tautomer thereof, or a combination thereof; and hydrofluoric acid or a hydrofluoric acid-generating compound; introducing the treatment fluid into a subterranean formation; dissolving a metal ion in the subterranean formation; and complexing the metal ion in the subterranean formation with the hydroxypyridinecarboxylic acid.
C. Treatment fluids comprising a hydroxypyridinecarboxylic hydroxypyridinecarboxylic acid, a salt thereof, a tautomer thereof, or a combination thereof; and hydrofluoric acid or a hydrofluoric acid-generating compound.

Each of embodiments A and B may have one or more of the following additional elements in any combination:
Element 1: wherein the metal ion is selected from the group consisting of an aluminum ion, a ferric ion, and any combination thereof.
Element 2: introducing an acid or an acid-generating compound into the subterranean formation.
Element 3: wherein the acid or the acid-generating compound comprises hydrofluoric acid or a hydrofluoric acid-generating compound.
Element 4: wherein the acid or the acid-generating compound is introduced into the subterranean formation separately from the treatment fluid.
Element 5: wherein the acid or the acid-generating compound is present in the treatment fluid.
Element 6: wherein the treatment fluid has a pH ranging between about 0 and about 7.
Element 7: wherein the treatment fluid has a pH ranging between about 0 and about 2.
Element 8: wherein the treatment fluid further comprises another chelating agent.
Element 9: wherein the hydroxypyridinecarboxylic acid contains a 1,2-arrangement of its carboxylic acid group and its hydroxyl group.
Element 10: wherein the hydroxypyridinecarboxylic acid has a structure selected from the group consisting of 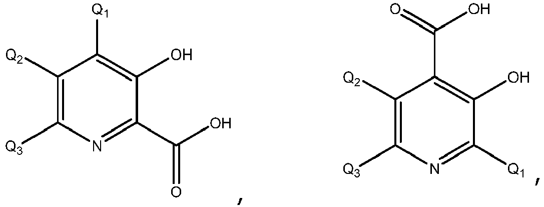 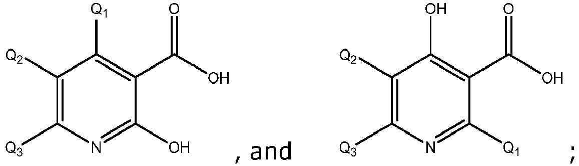 wherein Q₁-Q₃ are independently H or any substituent.
Element 11: wherein the treatment fluid further comprises a carrier fluid comprising an alkali metal ion.

By way of non-limiting example, exemplary combinations applicable to A and B include:
Combination 1: The method of A or B in combination with Elements 1 and 6.
Combination 2: The method of A or B in combination with Elements 1 and 7.
Combination 3: The method of A or B in combination with Elements 1 and 8.
Combination 4: The method of A or B in combination with Elements 1 and 10.
Combination 5: The method of A or B in combination with Elements 1 and 11.
Combination 6: The method of A or B in combination with Elements 1, 6 and 10.
Combination 7: The method of A or B in combination with Elements 1, 8 and 10.
Combination 8: The method of A or B in combination with Elements 1, 10 and 11.

Likewise, embodiment C may have any of Elements 6-11 present in any combination. By way of non-limiting example, exemplary combinations applicable to C include:
Combination 9: The treatment fluid of C in combination with Elements 7 and 8.
Combination 10: The treatment fluid of C in combination with Elements 7 and 10.
Combination 11: The treatment fluid of C in combination with Elements 6 and 11.
Combination 12: The treatment fluid of C in combination with Elements 7, 8 and 10.

Therefore, the present invention is well adapted to attain the ends and advantages mentioned as well as those that are inherent therein. While compositions and methods are described in terms of "comprising," "containing," or "including" various components or steps, the compositions and methods can also "consist essentially of" or "consist of" the various components and steps. Also, the terms in the claims have their plain, ordinary meaning unless otherwise explicitly and clearly defined. Moreover, the indefinite articles "a" or "an," as used in the claims, are defined herein to mean one or more than one of the element that it introduces.

## Claims

1. A method comprising:
providing a treatment fluid comprising a hydroxypyridinecarboxylic acid, a salt thereof, a tautomer thereof, or a combination thereof;
introducing the treatment fluid into a subterranean formation; and
complexing an aluminium ion and/or a ferric ion in the subterranean formation with the hydroxypyridinecarboxylic acid;
wherein the hydroxypyridinecarboxylic acid is selected from the following compounds:

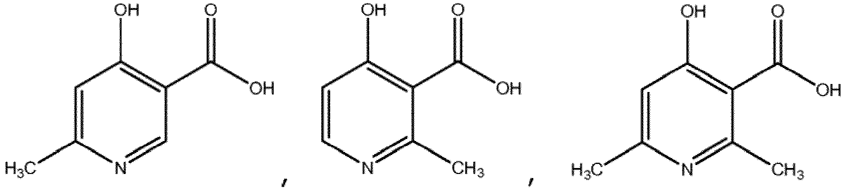

2. The method of Claim 1, further comprising introducing an acid or an acid-generating compound into the subterranean formation.

3. The method of Claim 2, wherein the acid or the acid-generating compound comprises hydrofluoric acid or a hydrofluoric acid-generating compound.

4. The method of Claim 2, wherein the acid or the acid-generating compound is introduced into the subterranean formation separately from the treatment fluid.

5. The method of Claim 2, wherein the acid or the acid-generating compound is present in the treatment fluid.

6. The method of Claim 1, wherein the treatment fluid further comprises hydrofluoric acid or a hydrofluoric acid-generating compound, and the method comprises the further step of dissolving the aluminium ion and/or ferric ion in the subterranean formation.

7. The method of Claim 6, wherein the aluminium ion and/or ferric ion is dissolved with the hydrofluoric acid or the hydrofluoric acid-generating compound.

8. The method of Claim 1 or Claim 6, wherein the treatment fluid has a pH of between 0 and 7.

9. The method of Claim 8, wherein the treatment fluid has a pH of between 0 and 2.

10. The method of Claim 1 or Claim 6, wherein the treatment fluid further comprises another chelating agent.

11. The method of Claim 6, wherein the treatment fluid further comprises a carrier fluid comprising an alkali metal ion.

12. A subterranean treatment fluid comprising:
a hydroxypyridinecarboxylic acid, a salt thereof, or a tautomer thereof; and
hydrofluoric acid or a hydrofluoric acid-generating compound;
wherein the hydroxypyridinecarboxylic acid is selected from the following compounds:

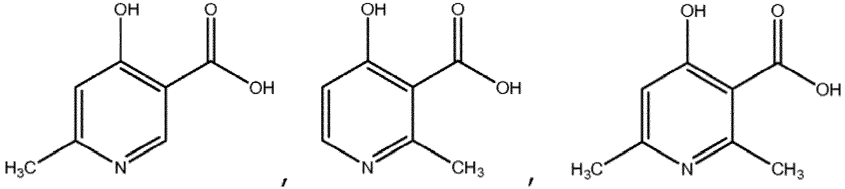

## Patentansprüche

1. Verfahren, umfassend:
Bereitstellen eines Behandlungsfluids, umfassend eine Hydroxypyridincarbonsäure, ein Salz davon, ein Tautomer davon oder eine Kombination davon;
Einführen des Behandlungsfluids in eine unterirdische Formation; und
Komplexieren eines Aluminiumions und/oder eines Eisen(III)ions in der unterirdischen Formation mit der Hydroxypyridincarbonsäure;
wobei die Hydroxypyridincarbonsäure ausgewählt ist aus den nachstehenden Verbindungen:

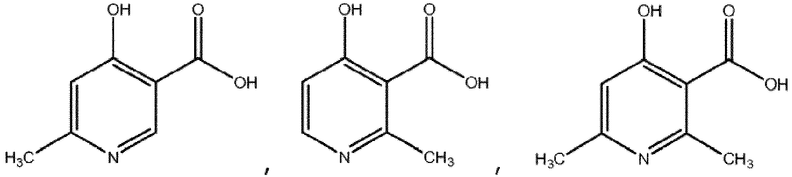

2. Verfahren nach Anspruch 1, weiter umfassend Einführen einer Säure oder einer Säure-erzeugenden Verbindung in die unterirdische Formation.

3. Verfahren nach Anspruch 2, wobei die Säure oder die Säure-erzeugende Verbindung Fluorwasserstoffsäure oder eine Fluorwasserstoffsäure-erzeugende Verbindung umfasst.

4. Verfahren nach Anspruch 2, wobei die Säure oder die Säure-erzeugende Verbindung in die unterirdische Formation getrennt von dem Behandlungsfluid eingeführt wird.

5. Verfahren nach Anspruch 2, wobei die Säure oder die Säure-erzeugende Verbindung in dem Behandlungsfluid vorliegt.

6. Verfahren nach Anspruch 1, wobei das Behandlungsfluid weiter Fluorwasserstoffsäure oder eine Fluorwasserstoffsäure-erzeugende Verbindung umfasst, und das Verfahren den weiteren Schritt des Auflösens des Aluminiumions und/oder Eisen(III)ions in der unterirdischen Formation umfasst.

7. Verfahren nach Anspruch 6, wobei das Aluminiumion und/oder Eisen(III)ion mit der Fluorwasserstoffsäure oder der Fluorwasserstoffsäure-erzeugenden Verbindung gelöst wird.

8. Verfahren nach Anspruch 1 oder Anspruch 6, wobei das Behandlungsfluid einen pH von zwischen 0 und 7 aufweist.

9. Verfahren nach Anspruch 8, wobei das Behandlungsfluid einen pH von zwischen 0 und 2 aufweist.

10. Verfahren nach Anspruch 1 oder Anspruch 6, wobei das Behandlungsfluid weiter ein weiteres Chelatisierungsmittel umfasst.

11. Verfahren nach Anspruch 6, wobei das Behandlungsfluid weiter ein ein Alkalimetallion umfassendes Trägerfluid umfasst.

12. Unterirdisches Behandlungsfluid, umfassend:
eine Hydroxypyridincarbonsäure, ein Salz davon oder ein Tautomer davon; und
Fluorwasserstoffsäure oder eine Fluorwasserstoffsäure-erzeugende Verbindung;
wobei die Hydroxypyridincarbonsäure ausgewählt ist aus den nachstehenden Verbindungen:

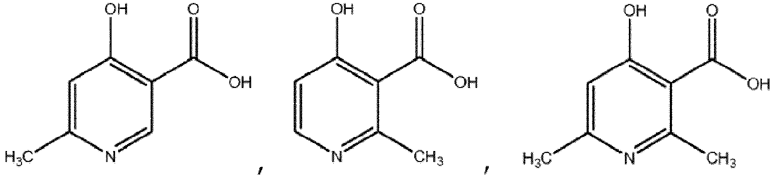

## Revendications

1. Procédé comprenant :
la fourniture d'un fluide de traitement comprenant un acide hydroxypyridinecarboxylique, un sel de celui-ci, un tautomère de celui-ci ou une combinaison de ceux-ci ;
l'introduction du fluide de traitement dans une formation souterraine ; et
la complexation d'un ion d'aluminium et/ou d'un ion ferrique dans la formation souterraine avec l'acide hydroxypyridinecarboxylique;
dans lequel l'acide hydroxypyridinecarboxylique est sélectionné à partir des composés suivants :

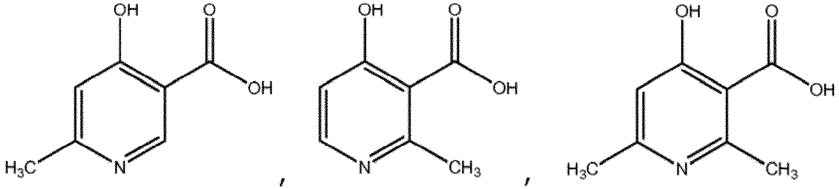

2. Procédé selon la revendication 1, comprenant en outre l'introduction d'un acide ou d'un composé générateur d'acide dans la formation souterraine.

3. Procédé selon la revendication 2, dans lequel l'acide ou le composé générateur d'acide comprend de l'acide fluorhydrique ou un composé générateur d'acide fluorhydrique.

4. Procédé selon la revendication 2, dans lequel l'acide ou le composé générateur d'acide est introduit dans la formation souterraine séparément du fluide de traitement.

5. Procédé selon la revendication 2, dans lequel l'acide ou le composé générateur d'acide est présent dans le fluide de traitement.

6. Procédé selon la revendication 1, dans lequel le fluide de traitement comprend en outre de l'acide fluorhydrique ou un composé générateur d'acide fluorhydrique, et le procédé comprend l'étape supplémentaire de dissolution de l'ion d'aluminium et/ou de l'ion ferrique dans la formation souterraine.

7. Procédé selon la revendication 6, dans lequel l'ion d'aluminium et/ou l'ion ferrique est dissous avec l'acide fluorhydrique ou le composé générateur d'acide fluorhydrique.

8. Procédé selon la revendication 1 ou la revendication 6, dans lequel le fluide de traitement a un pH compris entre 0 et 7.

9. Procédé selon la revendication 8, dans lequel le fluide de traitement a un pH compris entre 0 et 2.

10. Procédé selon la revendication 1 ou la revendication 6, dans lequel le fluide de traitement comprend en outre un autre agent chélatant.

11. Procédé selon la revendication 6, dans lequel le fluide de traitement comprend en outre un fluide porteur comprenant un ion de métal alcalin.

12. Fluide de traitement souterrain comprenant :
un acide hydroxypyridinecarboxylique, un sel de celui-ci ou un tautomère de celui-ci ;
et de l'acide fluorhydrique ou un composé générateur d'acide fluorhydrique ;
dans lequel l'acide hydroxypyridinecarboxylique est sélectionné à partir des composés suivants :
